Europäisches Patentamt

European Patent Office

Office européen des brevets

(11) Numéro de publication: **0 349 362**
**A1**

# (12) DEMANDE DE BREVET EUROPEEN

(21) Numéro de dépôt: **89401613.8**

(22) Date de dépôt: **09.06.89**

(51) Int. Cl.⁵: **G 11 B 5/187**

(30) Priorité: **24.06.88 FR 8808527**

(43) Date de publication de la demande:
**03.01.90 Bulletin 90/01**

(84) Etats contractants désignés: **DE FR GB IT NL**

(71) Demandeur: **COMPAGNIE EUROPEENNE DE COMPOSANTS ELECTRONIQUES LCC**
**50, rue Jean-Pierre Timbaud**
**F-92400 Courbevoie (FR)**

(72) Inventeur: **Coutellier, Jean-Marc**
**THOMSON-CSF SCPI-Cédex 67**
**F-92045 Paris la Défense (FR)**

**Jacobelli, Alain**
**THOMSON-CSF SCPI-Cédex 67**
**F-92045 Paris la Défense (FR)**

**Magna, Henriette**
**THOMSON-CSF SCPI-Cédex 67**
**F-92045 Paris la Défense (FR)**

**Meunier, Paul-Louis**
**THOMSON-CSF SCPI-Cédex**
**F-92045 Paris la Défense (FR)**

(74) Mandataire: **Guérin, Michel et al**
**THOMSON-CSF SCPI**
**F-92045 PARIS LA DEFENSE CEDEX 67 (FR)**

(54) Procédé de réalisation de la planéité d'une face active pour tête magnétique d'enregistrement/lecture.

㊗ L'invention concerne un procédé de réalisation de la planéité d'une face active pour tête magnétique d'enregistrement/lecture, la planéité de la face active étant obtenue par polissage, la face active étant du type où, avant l'opération de polissage, le niveau du matériau constituant l'entrefer (20) se trouve en retrait par rapport aux pôles magnétiques (31, 32). Le procédé comporte les étapes suivantes :
- 1ère étape : dépôt sur ladite face active (12) d'une couche mince (30) de matériau non magnétique d'épaisseur au moins égale au retrait de l'entrefer,
- 2ème étape : polissage de la couche mince non magnétique (30) pour obtenir la planéité de la face active.

FIG_7

Description

## PROCEDE DE REALISATION DE LA PLANEITE D'UNE FACE ACTIVE POUR TETE MAGNETIQUE D'ENREGISTREMENT/LECTURE

L'invention concerne un procédé de réalisation de la planéité d'une face active pour tête magnétique d'enregistrement/lecture, la planéité de la face active étant obtenue par polissage.

Les têtes magnétiques de lecture et/ou d'enregistrement sont constituées d'un circuit magnétique en forme d'anneau coupé par un entrefer étroit constitué d'un matériau non magnétique.

On peut classer les têtes magnétiques en trois grandes familles :

- les têtes massives sont réalisées par usinage et assemblage de deux demi-têtes en matériau magnétique telles que les têtes vidéo (têtes VHS) ou les têtes audio analogiques. Le bobinage de ces têtes est réalisé en fin de procédé de réalisation.

- Les têtes couches minces sont réalisées par dépôts successifs de matériaux magnétiques, diélectriques et conducteurs. Ces couches subissent des opérations de masquage et de gravure qui permettent d'obtenir le circuit magnétique, l'entrefer et les spires conductrices.

- Les têtes comportant de chaque côté de l'entrefer un alliage métallique magnétique d'épaisseur variant entre 0,1 et 40 micromètres, le reste du circuit magnétique et les spires conductrices étant réalisés de la même façon que pour les têtes massives. Il s'agit des têtes dites MIG (Metal In Gap) qui sont utilisées aujourd'hui dans les systèmes vidéo 8 mm ou audio numérique RDAT (Rotary Digital Audio Tape).

Dans le procédé de réalisation d'une tête magnétique d'enregistrement/lecture, il est souvent nécessaire d'usiner une partie hétérogène constituée par association d'un matériau magnétique (de la ferrite par exemple) et d'un matériau non magnétique (du verre par exemple). C'est le cas notamment pour la réalisation de la tête magnétique décrite dans la demande de brevet français de la demanderesse enregistrée sous le n° 87 14824. Si une couche mince magnétique doit être déposée sur cette face usinée, comme pour la tête magnétique décrite dans la demande de brevet français de la demanderesse enregistrée sous le n° 87 14820, il est nécessaire de disposer d'une excellente qualité de surface.

Cependant, l'opération de polissage d'une partie hétérogène conduit toujours à une usure différentielle des deux matériaux constituant cette partie hétérogène. Cette usure différentielle est d'autant plus importante que les matériaux présentent des duretés différentes. C'est le cas en particulier de la ferrite qui se polit habituellement avec un mélange de poudre de diamant, et du verre qui se polit habituellement avec de l'oxyde de cérium. Le plan ainsi usiné présente donc un défaut de planéité qui peut être incompatible avec les exigences des étapes suivantes de la réalisation de la tête magnétique.

Pour remédier à ce problème, l'invention propose un nouveau procédé de réalisation de la planéité d'une face active pour tête magnétique d'enregistre- ment/lecture qui prévoit une étape de dépôt d'un matériau non magnétique sur la face active, avant l'opération de polissage.

L'invention a donc pour objet un procédé de réalisation de la planéité d'une face active pour tête magnétique d'enregistrement/lecture, la planéité de la face active étant obtenue par polissage, la face active étant du type où, avant l'opération de polissage, le niveau du matériau constituant l'entrefer se trouve en retrait par rapport aux pôles magnétiques, le procédé étant caractérisé en ce qu il comporte les étapes suivantes :

- 1ère étape : dépôt sur ladite face active d'une couche mince de matériau non magnétique d'épaisseur au moins égale au retrait de l'entrefer,
- 2ème étape : polissage de la couche mince non magnétique pour obtenir la planéité de la face active.

L'invention sera mieux comprise, et d'autres avantages apparaîtront, à la lecture de la description qui va suivre, donnée à titre non limitatif, et grâce aux dessins annexés parmi lesquels :

- les figures 1 à 4 représentent différentes étapes d'un procédé de réalisation de têtes magnétiques selon l'art connu,
- la figure 5 est une vue de détail de la figure 4,
- les figures 6 et 7 représentent les deux étapes du procédé de réalisation selon l'invention.

L'invention s'applique particulièrement bien, mais pas exclusivement au cas où, avant l'étape classique de polissage, il existe un retrait du matériau non magnétique par rapport à la face active de la tête.

Selon la demande de brevet français déjà citée et portant le numéro d'enregistrement 87 14824, une tête d'enregistrement/lecture peut être réalisée de la manière suivante.

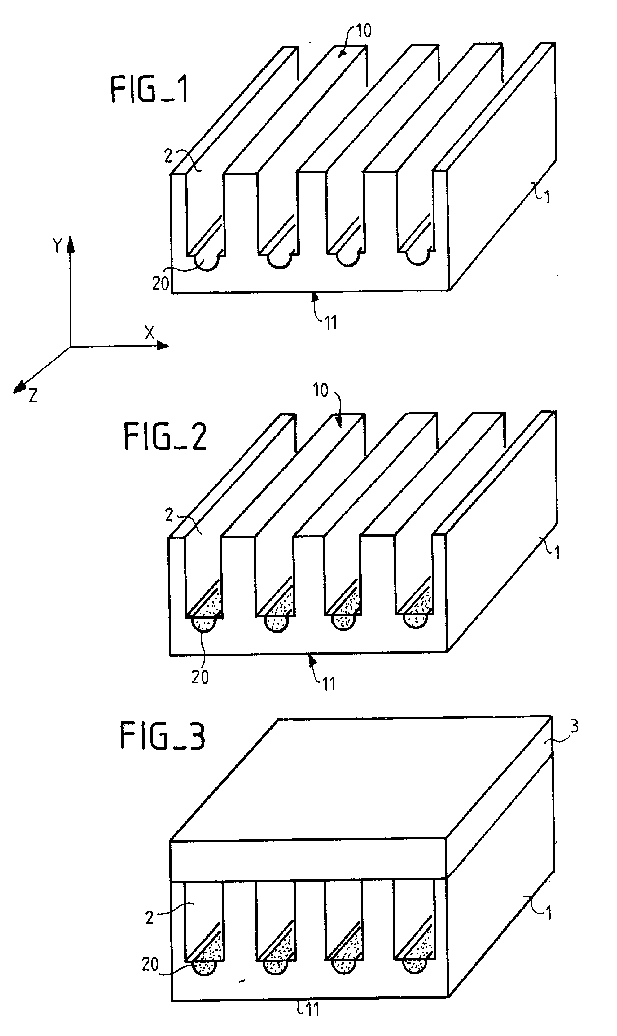

Au cours d'une première étape on réalise dans un substrat 1 en matériau magnétique, tel qu'un bloc de ferrite, une ou plusieurs encoches sensiblement perpendiculaires à une face principale du substrat. Sur la figure 1, on a ainsi représenté un substrat 1 dans lequel ont été réalisées quatre encoches telles que 2. Ces encoches sont perpendiculaires à la face 10 du substrat. Elles possèdent, au fond de l'encoche, un rétrécissement 20. Toutes ces encoches ont la même profondeur et n'atteignent pas la face 11 opposée à la face 10.

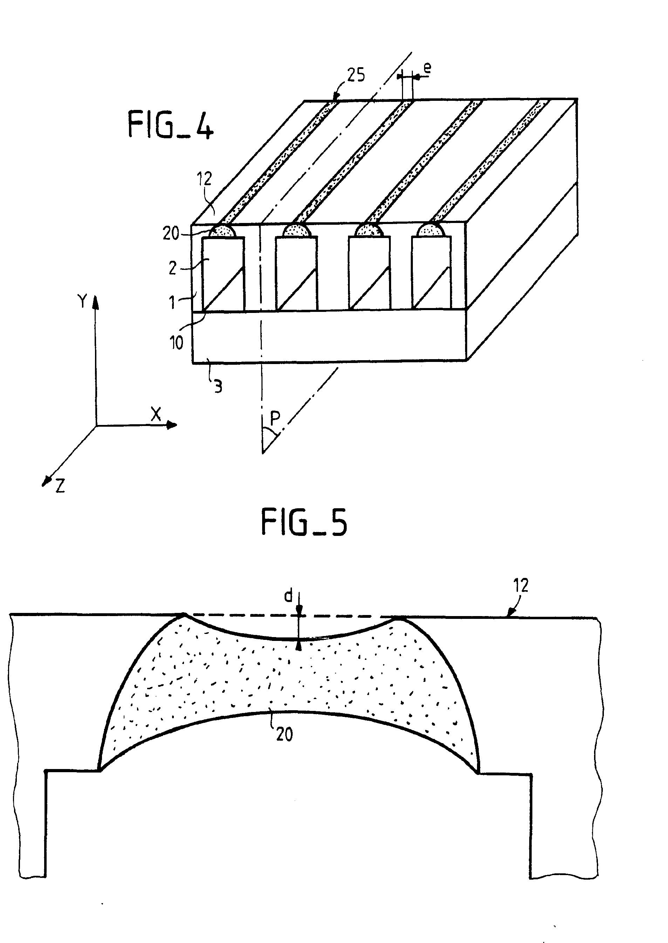

Au cours d'une deuxième étape, on remplit les rétrécissements, tels que 20, d'un matériau non magnétique. Par exemple, on coule un matériau à base de verre. On obtient ainsi une structure telle que celle de la figure 2.

Au cours d'une troisième étape représentée en figure 3, on fixe, sur la face 10 du substrat, une plaque 3 d'un matériau magnétique. Cette plaque referme les encoches réalisées précédemment et permettra de refermer le circuit magnétique de la tête.

Au cours d'une quatrième étape, on usine la face 11 du substrat parallèlement aux fonds des encoches. On atteint les rétrécissements 20 et on usine jusqu'à obtenir des entrefers tels que 25, constitués du matériau non magnétique, de largeur $e$ désirée. On obtient ainsi une structure telle que représentée en figure 4. La précision de largeur de l'entrefer est réglée par l'épaisseur d'usinage de la face 11.

En fait, à ce stade de la fabrication, il existe, à la face active 12, un retrait du matériau non magnétique par rapport au matériau magnétique. Ce retrait est dû à la différence de dureté entre les matériaux magnétiques et non magnétiques. La figure 5 est une vue agrandie d'un détail de la figure 4, sur laquelle apparaissent les retraits du verre par rapport au matériau magnétique et en particulier au niveau de la face active 12.

Il faut disposer d'une bonne qualité de surface pour la face active 12. En règle générale, on désire obtenir une valeur moyenne de l'ondulation de la surface de la face active qui soit de l'ordre de 0,4 μm, la valeur maximale de l'ondulation étant inférieure à 1μm. C'est le but de l'opération de polissage.

Selon l'invention, on dépose sur la face active 12 une couche mince non magnétique constituée, par exemple, de silice ou d'alumine. Cette couche peut être obtenue par n'importe quelle méthode de dépôt, par exemple par pulvérisation ou évaporation. L'épaisseur de la couche déposée doit être au moins égale à l'amplitude du retrait $d$ du matériau non magnétique.

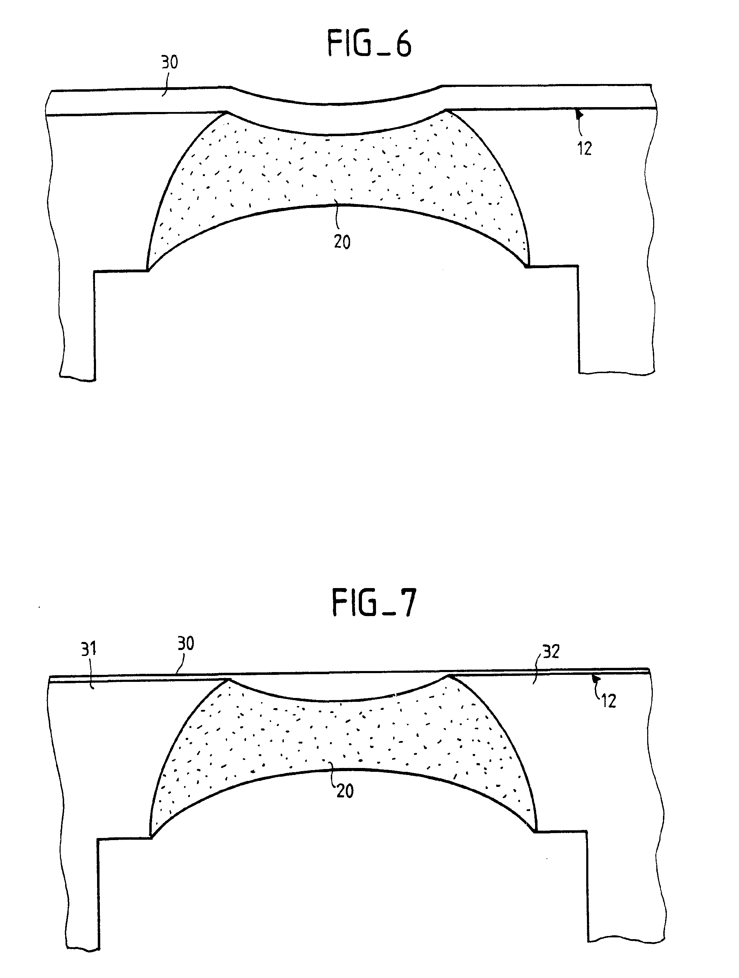

La figure 6 illustre cette étape du procédé, la couche non magnétique 30 recouvrant toute la face active 12.

Toujours selon l'invention, la couche mince 30 est polie jusqu'à ne laisser subsister qu'une pellicule très fine du matériau constituant cette couche, sur les pôles magnétiques 31 et 32 de la face active 12. On dispose alors d'une face active répondant aux critères de planéité requis, puisque le polissage a été effectué sur un seul matériau. La technique de polissage employée pour le matériau de la couche 30, ne pose pas de problème à l'homme de l'art.

La tête magnétique est alors terminée comme l'indique, par exemple, la demande de brevet français enregistrée sous le numéro 87 14824. La structure réalisée est découpée en circuits magnétiques individuels. La découpe se fait selon des plans tels que P situés entre les encoches et parallèles à l'axe des encoches. La structure de la figure 4 étant placée dans un trièdre XYZ, avec les faces 10 et 11 parallèles au plan XZ, les plans tels que P sont parallèles au plan ZY.

Ensuite, on découpe également, selon des plans non représentés, parallèles au plan YX.

Au cours d'une étape ultérieure, chaque circuit magnétique est équipé d'un bobinage bobiné par l'encoche 2 autour d'une branche du circuit magnétique.

L'invention ne se limite pas à l'exemple décrit ci-dessus. Les étapes du procédé selon l'invention, permettant la réalisation de la planéité d'une face active (étape de dépôt de la couche mince non magnétique et étape de polissage), peuvent être mises en oeuvre sur d'autres exemples de réalisation sans présenter de difficulté à l'homme de l'art.

Le procédé selon l'invention a encore l'avantage de pouvoir être appliqué au cours de la fabrication en série de têtes magnétiques.

**Revendications**

1 - Procédé de réalisation de la planéité d'une face active pour tête magnétique d'enregistrement/lecture, la planéité de la face active étant obtenue par polissage, la face active étant du type où, avant l'opération de polissage, le niveau du matériau constituant l'entrefer (20) se trouve en retrait par rapport aux pôles magnétiques (31, 32), le procédé étant caractérisé en ce qu'il comporte les étapes suivantes :
- 1ère étape : dépôt sur ladite face active (12) d'une couche mince (30) de matériau non magnétique d'épaisseur au moins égale au retrait de l'entrefer,
- 2ème étape : polissage de la couche mince non magnétique (30) pour obtenir la planéité de la face active.

2 - Procédé selon la revendication 1, caractérisé en ce que la couche mince (30) de matériau non magnétique est de l'alumine ou de la silice.

FIG_1

10

2

1

Y

X

Z

20

11

FIG_2

10

2

1

20

11

FIG_3

3

2

1

20

11

FIG_4

FIG_5

## FIG_6

## FIG_7

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | PATENT ABSTRACTS OF JAPAN, vol. 7, no. 231 (P-229)[1376], 13 octobre 1983, page 164 P 229; & JP-A-58 121 120 (HITACHI SEISAKUSHO K.K.) 19-07-1983 * Résumé * | 1,2 | G 11 B  5/187 |
| A | US-A-3 614 831  (GRUNDTNER et al.) * Colonne 2, lignes 28-35,66-72; colonne 3, ligne 74 - colonne 4, lignes 12,23-61; figures 2,3 * | 1 | |
| A | XEROX DISCLOSURE JOURNAL, vol. 9, no. 4, juin/août 1984, pages 235-236, Stamford, Connecticut, US; M.R. CAMPANELLI: "Silicon-sealed, thin-film magnetic head image bar" * Page 236, fin du paragraphe 1 - fin du dernier paragraphe * | 1,2 | |
| A | PATENT ABSTRACTS OF JAPAN, vol. 5, no. 150 (P-81)[822], 22 septembre 1981, page 151 P 81; & JP-A-56 83 869 (FUJITSU K.K.) 08-07-1981 * Résumé * | 1,2 | DOMAINES TECHNIQUES RECHERCHES (Int. Cl.4) G 11 B |
| A | US-A-3 486 220  (BRAUN et al.) | | |

Le présent rapport a été établi pour toutes les revendications

| Lieu de la recherche | Date d'achèvement de la recherche | Examinateur |
|---|---|---|
| LA HAYE | 03-10-1989 | FUX J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.............................................................................................
& : membre de la même famille, document correspondant

EPO FORM 1503 03.82 (P0402)